# EUROPÄISCHE PATENTSCHRIFT

(11) **EP 2 262 331 B1**
(45) Veröffentlichungstag und Bekanntmachung des Hinweises auf die Patenterteilung: **07.08.2019**
(21) Anmeldenummer: 10011931.2
(22) Anmeldetag: 06.06.2007
(51) Int. Cl.: G01S 5/02, H04W 64/00

(54) **Ortsbestimmungen von mobilen Endgeräten in einem Mobilfunknetz und Anwendungen derselben**
Determining the position of mobile terminals in a mobile telephone network and uses therefor
Déterminations spatiales de terminaux mobiles dans un réseau radio mobile et leurs utilisations

(30) Priorität: 09.06.2006 DE 102006027270
(43) Veröffentlichungstag der Anmeldung: 15.12.2010
(62) Teilanmeldung aus: 07011125.7
(73) Patentinhaber: Vodafone Holding GmbH, 40213 Düsseldorf (DE)
(72) Erfinder: Gerasimon, Nicolas, 31542 Bad Nenndorf (DE); Birle, Christian, 80799 München (DE)
(74) Vertreter: Ring & Weisbrodt

(56) Entgegenhaltungen:
- EP-A- 0 982 964
- WO-A-00/34799
- WO-A-02/43026
- WO-A-92/02105
- WO-A1-01/72060
- DE-A1- 10 105 678
- DE-A1- 10 334 140
- US-A- 6 112 095
- US-A1- 2001 022 558
- US-A1- 2002 107 634
- US-B1- 6 249 252
- US-B1- 6 249 680

## Beschreibung

Die vorliegende Erfindung betrifft ein Verfahren zur Bestimmung des geographischen Aufenthaltsorts eines in einem Mobilfunknetz betriebenen mobilen Endgerätes, wobei das Mobilfunknetz eine aus Funkzellen aufgebaute zellulare Netzstruktur ausbildende Einrichtungen aufweist. Ein derartiges Verfahren und entsprechende Vorrichtungen sind beispielsweise seitens der DE 101 05 678 A1 und seitens der US 2001/0022558 A1 offenbart. Gegenstand der vorliegenden Erfindung ist ferner ein Verfahren zur Ermittlung von Verkehrslageinformationen, wobei Informationen des geographischen Aufenthaltsorts von in einem Mobilfunknetz betriebenen mobilen Endgeräten seitens des Mobilfunknetzes erfasst und ausgewertet werden. Ein derartiges Verfahren und entsprechende das Verfahren verwirklichende Einrichtungen sind beispielsweise seitens der DE 103 34 140 A1 offenbart.

Gegenstand der vorliegenden Erfindung sind ferner ein Endgerät zum Betrieb in einem Mobilfunknetz und ein Mobilfunknetz, wobei das Endgerät und die Einrichtungen des Mobilfunknetzes zur Ausführung eines erfindungsgemäßen Verfahrens ausgebildet und/oder eingerichtet sind.

Bei den bisher bekannten Verfahren und Vorrichtungen der vorgenannten Art sind Nachteile hinsichtlich der Genauigkeit und/oder der Zuverlässigkeit der Bestimmung des geographischen Aufenthaltsorts der mobilen Endgeräte im Mobilfunknetz gegeben, insbesondere da die bisher bekannten Verfahren und Vorrichtungen äußerst anfällig gegenüber Störungen in der Funkverbindung zwischen mobilen Endgeräten und den die Funkzellen des Mobilfunknetzes ausbildenden Einrichtungen sind. Derartige Störungen beziehungsweise Unregelmäßigkeiten sind beispielsweise durch Abschirmungen, Beugungen, Reflektionen, Streuungen und dergleichen Störungen von Signalen durch Gebäude, Schallschutzwände, Bäume, Hügel und/oder dergleichen topographischen Besonderheiten sowie Witterungseinflüsse begründet.

WO 00/34799 A1 offenbart ein Verfahren zum Bestimmen von Positionen von mobilen Sendern in einem drahtlosen Kommunikationssystem, welches eine Signatur aus Signalen berechnet, die an einer Antennenanordnung von dem Mobiltelefon empfangen werden, und die Signatur mit kalibrierten Signaturen ab gleicht, die in einer Datenbank gespeichert sind, um den Standort des Mobilgeräts zu schätzen. Die Signatur enthält dabei Informationen, die den räumlichen Kanal zwischen dem Mobiltelefon und der Antennenanordnung charakterisieren.

US 6,112,095 A offenbart ein Verfahren zum drahtlosen Lokalisieren eines Satz wahrscheinlicher Orte aus einer Signalkovarianzmatrix, einem Satz von Array-Kalibriervektoren und einem Satz von kalibrierten Signalkovarianzmatrizen, welche kalibrierten Orten entsprechen. Aus diesen Größen wird eine Winkelenergieverteilungsfunktion berechnet und mit einem Satz kalibrierter Winkelenergieverteilungsfunktionen verglichen.

US 2002/107634 A1 offenbart ein Verfahren zur Verkehrsüberwachung und Vorhersage der Verkehrsintensität, umfassend die Schritte: Bestimmen von geografischen Positionen einer Vielzahl von mobilen Vorrichtungen in einem Mobilfunknetz innerhalb eines bestimmten Zeitintervalls mindestens zweimal durch Messen mindestens einer Eigenschaft von Signalen, die zwischen den mobilen Vorrichtungen und Basisstationen in dem Mobilfunknetz übertragen werden; Vergleichen mindestens einer Teilmenge der geografischen Positionen mit einer in einer Routendatenbank bereitgestellten Route einer Straße, um eine mobile Vorrichtung mit Routen zu identifizieren, die mindestens einem Teil der Straßenroute entsprechen; Berechnen einer Geschwindigkeit für die identifizierten mobilen Vorrichtungen basierend auf den mindestens zwei Positionen; und Vergleichen der berechneten Geschwindigkeit mindestens einer identifizierten mobilen Vorrichtung mit einer Referenzgeschwindigkeit der Straße, um die Verkehrsintensität auf der Straße vorherzusagen.

US 6,249,680 B1 offenbart ein Verfahren zum Lokalisieren in einem drahtlosen CDMA-Kommunikationssystem mittels Mehrwegsignalen, um eine Senderposition genau zu bestimmen. Direkte Weg- und Mehrwegsignale von einem mobilen Sender gelangen zu einer Anordnung von p-Antennen, die zu einer Basisstation eines Mobilfunknetzes gehören, so dass eine mit der Basisstation verbundene Ortungsvorrichtung, enthaltend einen Mehrkanalempfänger, PN-Sequenzinformationen des Basisstationsempfängers verwendet, um die p-Signale zu verteilen und jedes der p-Signale in zeitlich getrennte Mehrwegteile zu trennen.

WO 02/43026 A offenbart ein Mobilfunknetz, in dem ein Analysator in der Lage ist, den Verkehr auf Strecken in einer Verkehrsinfrastruktur, wie beispielsweise einem Straßennetz, zu überwachen. Der Analysator verwendet dabei Daten, die aus der Teilnehmerdatenbank des Netzes in Verbindung mit Informationen über die Netzabdeckung in Bezug auf diese Strecken abgeleitet werden, um Parameter wie die Durchschnittsgeschwindigkeit von Fahrzeugen, die entlang des Straßennetzes fahren, zu bestimmen.

WO 92/02105 A offenbart ein zellulares Funknetzübertragungs-initiationssystem umfassend Mittel zum Bestimmen sowohl der Entfernung eines mobilen Benutzers von einer zellularen Basisstation, basierend auf Ausbreitungsverzögerungstechniken, als auch Mittel zum Messen der Signalstärke, um den vom mobilen Benutzer zurückgelegten Weg zu bestimmen.

DE 103 34 140 A1 offenbart ein Verfahren zur Ermittlung von Verkehrsdaten, wobei Mobilfunkdaten von Verkehrsteilnehmern in der Zentrale des jeweiligen Mobilfunk-Betreibers erhoben und ausgewertet werden. Dabei wird der Übergangsbereich zwischen zwei Mobilfunk-Zellen eindeutig einem den Übergangsbereich querenden Straßenabschnitt zugeordnet, die Zunahme eines logischen Anmeldungszählers einer Mobilfunk-Zelle, die einem Zellwechsel eines Verkehrsteilnehmers entspricht, erfasst und ein Zusammenhang zwischen der Zahl der Zellwechsel an der virtuellen Zählstelle und den Verkehrsdaten auf diesem Streckenabschnitt ermittelt wird.

US 2001/022558 A1 und US 6,249,252 B1 offenbaren ein Ortungssystem für kommerzielle drahtlose Telekommunikationsinfrastrukturen, welches eines Endto-End-Lösung mit einem oder mehreren Standortzentren zur Ausgabe angeforderter Standorte von handelsüblichen Mobilgeräten oder Mobilstationen basierend auf z.B. CDMA, AMPS, NAMPS oder TDMA-Kommunikationsstandards darstellt und zur Verarbeitung sowohl lokaler MS-Standortanfragen als auch globaler MS-Standortanfragen über z.B. die Internetkommunikation zwischen einem verteilten Netzwerk von Standortzentren geeignet ist.

EP 0 982 964 A2 offenbart Verfahren zum Identifizieren einer geografischen Position eines mobilen Endgeräts, umfassend das Empfangen eines Satzes von Merkmalen von dem mobilen Endgerät, das Vergleichen des Satzes von Merkmalen von dem mobilen Endgerät mit einem Satz von Attributen für jede der Zellen und das Identifizieren einer der Unterzellen, deren Attribute am ehesten den Merkmalen von dem mobilen Endgerät entsprechen, als die Unterzelle, in der sich das mobile Endgerät befindet, beinhaltet.

DE 101 05 678 A1 offenbart ein Verfahren zur Ortsbestimmung von Paketdatendienst-fähigen Stationen in einem Funk-Kommunikationssystem, wobei jede Station über zumindest eine Funkschnittstelle innerhalb einer Funkzelle mit deren zugeordneter netzseitiger Netzstation kommuniziert, wobei seitens des Netzes periodisch bzw. auf Anforderung eine Ortsbestimmung zum Bestimmen des Aufenthaltsortes der Stationen durchgeführt wird.

WO 01/72060 A1 offenbart ein Verfahren zum Bestimmen des Standorts einer mobilen Einheit in einem drahtlosen Kommunikationssystem und zum Präsentieren derselben gegenüber einer entfernten Partei. Dabei wird der Standort einer entfernten mobilen Einheit bestimmt, indem ein Schnappschuss eines vordefinierten Abschnitts des von der mobilen Einheit aufgenommenen Hochfrequenzspektrums mit einer Referenzdatenbank verglichen wird, die mehrere Schnappschüsse an verschiedenen Orten enthält. Das Ergebnis des Vergleichs wird verwendet, um festzustellen, ob sich die mobile Einheit an einem bestimmten Ort befindet.

Der Erfindung liegt in Anbetracht dieses Standes der Technik die Aufgabe zugrunde, Verfahren der eingangs genannten Art zu verbessern, insbesondere hinsichtlich der Genauigkeit und der Zuverlässigkeit der Bestimmung des geographischen Aufenthaltsorts mobiler Endgeräte sowie der Ermittlung von Verkehrslageinformationen.

Zur technischen Lösung wird mit der vorliegenden Erfindung ein Verfahren zur Bestimmung des geographischen Aufenthaltsorts eines in einem Mobilfunknetz betriebenen mobilen Endgerätes, wobei das Mobilfunknetz eine aus Funkzellen aufgebaute zellulare Netzstruktur ausbildende Einrichtungen aufweist, vorgeschlagen, welches die folgenden Verfahrensschritte umfasst:
- Speicherung von Parametern zur Beschreibung von ortsabhängigen Empfangscharakteristika eines Signals, wobei die Parameter zusammen mit wenigstens einer Information zur Identifikation des Empfangsortes gespeichert werden,
- Empfangen von Parametern die die Empfangscharakteristika eines aktuell empfangenden Signals beschreiben, wobei die Parameter dem mobilen Endgerät zugeordnet sind und
- Bestimmen des Aufenthaltsortes des mobilen Endgerätes durch Vergleichen der empfangenden Parameter mit gespeicherten Parametern.

Das Verfahren ist dadurch gekennzeichnet, dass das Signal von einer Einrichtung des Mobilfunknetzes gesendet und von einem mobilen Endgerät empfangen wird und eine entsprechende Signalantwort des mobilen Endgerätes, umfassend die jeweils aktuellen Parameter hinsichtlich der Empfangscharakteristika des Signals von der Einrichtung des Mobilfunknetzes empfangen wird und topographisch und/oder mobilfunknetzseitig begründete Änderungen hinsichtlich des Empfangs der wenigstens eine Funkzelle ausbildenden Einrichtungen des Mobilfunknetzes von dem wenigstens einen mobilen Endgerät im Rahmen einer vorzugsweise dynamisch erfolgenden Anpassung der gespeicherten Parameter erfasst werden.

Der Erfindung liegt die Erkenntnis zugrunde, dass eine insbesondere hinsichtlich der Genauigkeit und der Zuverlässigkeit verbesserte Bestimmung des geographischen Aufenthaltsorts mobiler Endgeräte ermöglicht wird, wenn die Empfangscharakteristika eines Signals zur Bestimmung des geographischen Aufenthaltsorts genutzt werden. Dabei macht sich die Erfindung die Erkenntnis zunutze, dass die Empfangscharakteristika eines Signals aufgrund von Abschattungs- beziehungsweise Abschirmungs-, Beugungs-, Reflektion- und/oder Streuungseffekten hinsichtlich ihrer idealtypischen radialen Ausbreitung derart einzigartig verändert werden, dass anhand der entsprechenden Empfangscharakteristika typische geographisch einzigartige Abweichungen von der idealtypischen radialen Ausbreitung der Signale gegeben sind, die durch entsprechende Erfassung und Vergleich eine genaue und zuverlässige Bestimmung des geographischen Aufenthaltsorts mobiler Endgeräte ermöglicht.

Vorteilhafterweise dienen die Parameter des Signals wenigstens zur Beschreibung von Streuungen, Beugungen, Abschattungen und/oder Reflektionen oder werden dazu genutzt.

Eine weitere Ausgestaltung der Erfindung sieht vor, dass im Rahmen des Vergleichs wenigstens eine zu wenigstens einem vorhergehenden Zeitpunkt erfasste Information hinsichtlich des Empfangs und/oder wenigstens ein zu wenigstens einem vorhergehenden Zeitpunkt bestimmter Aufenthaltsort zur Bestimmung des aktuellen Aufenthaltsorts des mobilen Endgerätes berücksichtigt wird. Durch diese erfindungsgemäße Ausgestaltung ist die Genauigkeit und die Zuverlässigkeit hinsichtlich der Bestimmung des geographischen Aufenthaltsorts eines mobilen Endgerätes weiter verbesserbar, insbesondere da so die Vorgeschichte einer geographischen Bewegung eines mobilen Endgerätes nachverfolgbar und hinsichtlich Plausibilität überprüft werden kann.

Eine weitere besonders vorteilhafte Ausgestaltung der Erfindung sieht vor, dass topographisch und/oder mobilfunknetzseitig begründete Änderungen hinsichtlich des Empfangs der wenigstens eine Funkzelle ausbildenden Einrichtungen des Mobilfunknetzes mittels wenigstens eines mobilen Endgerätes im Rahmen einer vorzugsweise dynamisch erfolgenden Anpassung der gespeicherten Parameter erfasst werden. Erfindungsgemäß können so Zu- und/oder Abschaltungen von eine Funkzelle ausbildenden Einrichtungen des Mobilfunknetzes, beispielsweise aufgrund von Störungen seitens derselben und/oder aufgrund von Auslastungen derselben, erfasst und hinsichtlich der Bestimmung des geographischen Aufenthaltsortes berücksichtigt werden. Gleiches gilt für durch topographische Veränderungen gegebene beziehungsweise bedingte Veränderungen der Empfangscharakteristika von Signalen, beispielsweise durch neu errichtete Gebäude, Fahrzeuge oder dergleichen topographischen Änderungen.

Eine weitere vorteilhafte Ausgestaltung der Erfindung sieht vor, dass die Geschwindigkeit der Änderungen des geographischen Aufenthaltsortes des mobilen Endgerätes bestimmt wird, vorzugsweise durch Berechnung aus den Differenzen des bestimmten Ortes des mobilen Endgerätes über der Zeit. Vorteilhafterweise erfolgt bei Bestimmung der Änderungsgeschwindigkeit ergänzend und/oder zusätzlich eine Plausibilitätsprüfung. Durch die Bestimmung der Änderungsgeschwindigkeit des geographischen Aufenthaltsortes eines mobilen Endgerätes ist darüber hinaus ein weiterer Parameter bereitgestellt, welcher zur Bestimmung des geographischen Aufenthaltsortes und/oder zur Erfassung beziehungsweise Ermittlung von Verkehrslageinformationen genutzt werden kann. Insgesamt lässt sich dadurch die Genauigkeit als auch die Zuverlässigkeit weiter steigern.

Vorteilhafterweise wird das Signal von einer Einrichtung des Mobilfunknetzes gesendet und von einem mobilen Endgerät empfangen. Eine weitere Ausgestaltung sieht vor, dass das Signal von einem mobilen Endgerät gesendet und von einer Einrichtung des Mobilfunknetzes empfangen wird. Die erfindungsgemäß vorgesehenen Einrichtungen des Mobilfunknetzes sind vorteilhafterweise die wenigstens eine Funkzelle ausbildenden Einrichtungen des Mobilfunknetzes.

Eine weitere Ausgestaltung der Erfindung sieht ein Verfahren zur Bestimmung des geographischen Aufenthaltsortes eines in einem Mobilfunknetz betriebenen mobilen Endgerätes vor, wobei das Mobilfunknetz eine aus Funkzellen aufgebaute zellulare Netzstruktur ausbildende Einrichtungen aufweist, der geographische Aufenthaltsort dieser Einrichtungen des Mobilfunknetzes und/oder der von diesen Einrichtungen des Mobilfunknetzes ausgebildeten Funkzellen des Mobilfunknetzes seitens wenigstens einer Datenbank des Mobilfunknetzes erfasst ist und das mobile Endgerät zu Kommunikationszwecken über wenigstens eine Funkschnittstelle des Mobilunknetzes mit wenigstens einer dieser Einrichtungen des Mobilfunknetzes verbindbar ist, welches dadurch gekennzeichnet ist, dass seitens wenigstens einer Datenbank des Mobilfunknetzes Referenzinformationen hinsichtlich des Empfangs der wenigstens eine Funkzelle ausbildenden Einrichtungen des Mobilfunknetzes und/oder der wenigstens eine benachbarte Funkzelle ausbildenden Einrichtungen des Mobilfunknetzes seitens eines sich in wenigstens einer der Funkzellen des Mobilfunknetzes aufhaltenden mobilen Endgerätes, vorzugsweise einem Referenzendgerät, mit dessen geographischen Aufenthaltsort erfasst sind, am aktuellen Aufenthaltsort des mobilen Endgerätes in wenigstens einer der Funkzellen des Mobilfunknetzes seitens des mobilen Endgerätes wenigstens eine Information hinsichtlich des Empfangs der die wenigstens eine Funkzelle ausbildenden Einrichtung des Mobilfunknetzes und/oder wenigstens einer wenigstens eine benachbarte Funkzelle ausbildenden Einrichtung des Mobilfunknetzes erfasst wird, die wenigstens eine seitens des mobilen Endgerätes erfasste Information an das Mobilfunknetz übertragen wird, seitens des Mobilfunknetzes wenigstens ein Vergleich der wenigstens einen von dem mobilen Endgerät übertragenen Information mit seitens der wenigstens einen Datenbank des Mobilfunknetzes erfassten Referenzinformationen und der in der wenigstens einen Datenbank des Mobilfunknetzes erfassten geographischen Aufenthaltsorte dieser Einrichtungen und/oder der von diesen Einrichtungen ausgebildeten Funkzellen des Mobilfunknetzes erfolgt und anhand des Vergleichs der geographischen Aufenthaltsorte des mobilen Endgerätes bestimmt wird.

Vorteilhafterweise werden dabei die Referenzinformationen und die Informationen hinsichtlich des Empfangs der die wenigstens eine Funkzelle ausbildenden Einrichtung des Mobilfunknetzes und/oder wenigstens einer wenigstens eine benachbarte Funkezelle ausbildenden Einrichtung des Mobilfunknetzes hinsichtlich der empfangenen elektromagnetischen Feldstärke und/oder der Signallaufzeit, vorzugsweise dem sogenannten Timing Advance (TA), erfasst, vorzugsweise in einem Messbericht, einem sogenannten Measurement Report (MR) gemäß dem GSM- und/oder UMTS-Funknetzstandard (GSM: Global System Mobile; UMTS: Universal Mobile Telecommunications System).

So wird beispielsweise bei einer Kommunikationsverbindung in einem Mobilfunknetz gemäß dem GSM-Funknetzstandard alle 480 ms ein sogenannter Measurement Report (MR) von dem mobilen Endgerät zu der wenigstens eine Funkzelle ausbildenden Einrichtung, einer sogenannten Base Station (BTS) gesendet. Dieser Measurement Report (MR) enthält unter anderem das sogenannte Timing Advance (TA) und die Empfangsfeldstärken der verbundenen Funkzelle sowie den zugehörigen Nachbarfunkzellen. Vorteilhafterweise werden diese Daten genutzt, um den geographischen Aufenthaltsort des mobilen Endgerätes zu bestimmen. Während im Stand der Technik bekannte Verfahren darauf beruhen, dass dabei keine Störungen zwischen den Antennenmasten der Base Stations (BTSs) und dem mobilen Endgerät bestehen, also eine direkte Sichtverbindung gegeben ist, werden erfindungsgemäß Störungen der direkten Sichtverbindung ausgenutzt. Durch die Störungen ist eine besondere, einmalige Empfangscharakteristik beziehungsweise -situation gegeben, welche quasi als Signatur für die Bestimmung des Aufenthaltsorts genutzt wird. Hierbei werden erfindungsgemäß insbesondere die baulichen Gegebenheiten hinsichtlich Abschattung durch Gebäude und/oder die sogenannte Funkausleuchtung von Straßenzügen genutzt. So ist beispielsweise an einer Straßenkreuzung nur eine ganz bestimmte Empfangssituation gegeben, weil nur da zwei bestimmte Zellen seitens des mobilen Endgerätes empfangbar beziehungsweise kontaktierbar sind. Die Berücksichtigung des jeweiligen Timing Advance (TA) und die Informationen über weitere Nachbarzellen ermöglichen dabei eine genauere und zuverlässigere Bestimmung des geographischen Aufenthaltsorts des mobilen Endgerätes.

In einer weiteren Ausgestaltung wird im Rahmen des Vergleichs wenigstens eine zu wenigstens einem vorhergehenden Zeitpunkt erfasste Information hinsichtlich des Empfangs der die wenigstens eine Funkzelle ausbildenden Einrichtung des Mobilfunknetzes und/oder wenigstens einer wenigstens eine benachbarte Funkzelle ausbildenden Einrichtung des Mobilfunknetzes und/oder wenigstens ein zu wenigstens einem vorhergehenden Zeitpunkt bestimmter Aufenthaltsort zur Bestimmung des aktuellen Aufenthaltsorts des mobilen Endgerätes berücksichtigt.

Eine weitere Ausgestaltung sieht vor, dass topographisch und/oder mobilfunknetzseitig begründete Änderungen hinsichtlich des Empfangs der wenigstens eine Funkzelle ausbildenden Einrichtung des Mobilfunknetzes und/oder der wenigstens eine benachbarte Funkzelle ausbildenden Einrichtungen des Mobilfunknetzes seitens eines sich in wenigstens einer der Funkzellen des Mobilfunknetzes aufhaltenden mobilen Endgerätes mittels wenigstens eines mobilen Endgerätes, vorzugsweise einem Referenzendgerät, im Rahmen einer vorzugsweise dynamisch erfolgenden Anpassung der Referenzinformationen seitens der wenigstens einen Datenbank des Mobilfunknetzes erfasst werden.

Zur technischen Lösung der eingangs genannten Aufgabe wird mit der vorliegenden Erfindung ferner ein Verfahren zur Ermittlung von Verkehrslageinformationen, wobei Informationen des geographischen Aufenthaltsorts von in einem Mobilfunknetz betriebenen mobilen Endgeräten seitens des Mobilfunknetzes erfasst und ausgewertet werden, vorgeschlagen, bei welchem die geographischen Aufenthaltsorte von zumindest einem in dem Mobilfunknetz betriebenen mobilen Endgerät nach einem erfindungsgemäßen Verfahren bestimmt werden.

Vorteilhafterweise wird mit der Erfindung ein Verfahren zur Ermittlung von Verkehrslageinformationen, wobei Informationen des geographischen Aufenthaltsorts von in einem Mobilfunknetz betriebenen mobilen Endgeräten seitens des Mobilfunknetzes erfasst und ausgewertet werden, vorgeschlagen, wobei zur Bestimmung der geographischen Aufenthaltsorte von zumindest einem in dem Mobilfunknetz betriebenen mobilen Endgerät Veränderungen und/oder Abweichungen in der Signalausbreitung von zellularen Signalen, vorzugsweise durch Abschattung, Beugung, Reflektion und/oder Streuung verursachte und/oder bedingte Veränderungen und/oder Abweichungen von einer idealtypischen radialen Ausbreitung der Signale, erfasst und geographischen Aufenthaltsorten zugeordnet werden.

Eine vorteilhafte Ausgestaltung der Erfindung ist gekennzeichnet durch eine Auswertung hinsichtlich einer Verteilung der geographischen Aufenthaltsorte mobiler Endgeräte. Eine entsprechende Verteilungsauswertung ist vorteilhafterweise zusätzlich zu einer Bestimmung von Verkehrslageinformationen zur Bereitstellung von Ressourcen seitens des Mobilfunknetzes heranziehbar, beispielsweise wenn sich im Rahmen von Großereignissen oder dergleichen Veranstaltungen zahlreiche mobile Endgeräte in einem bestimmten Bereich des Mobilfunknetzes aufhalten oder sich in absehbarer Zeit, also prognostiziert, aufhalten werden. So kann beispielsweise vorausschauend Einfluss auf die Kapazitäten des Mobilfunknetzes genommen werden.

Eine weitere vorteilhafte Ausgestaltung der Erfindung ist gekennzeichnet durch eine zusätzliche Erfassung und/oder Auswertung hinsichtlich des Zeitpunkts des Aufenthalts mobiler Endgeräte an dem jeweiligen geographischen Aufenthaltsort. Hier lässt sich die Genauigkeit also die Zuverlässigkeit der Ermittlung von Verkehrslageinformationen weiter steigern.

Eine besonders bevorzugte Ausgestaltung der Erfindung ist gekennzeichnet durch eine prognostizierende Auswertung hinsichtlich einer zu erwartenden Verkehrslage. Erfindungsgemäß lassen sich so sogenannte Stauprognosen oder dergleichen Verkehrslageinformationen vorausschauend erstellen und die Zuverlässigkeit und Genauigkeit weiter steigern.

In einer weiteren Ausgestaltung der Erfindung wird das Ergebnis der Auswertung zumindest teilweise über das Mobilfunknetz an wenigstens ein mobiles Endgerät übertragen und seitens desselben wiedergegeben. Der Nutzer eines mobilen Endgerätes kann so erfindungsgemäß entsprechende Verkehrslageinformationen als Dienst seitens mobilen Endgerätes nutzen, beispielsweise als Information für Stauwarnungen oder dergleichen Verkehrslageinformation. Eine bevorzugte Ausgestaltung der Erfindung sieht eine Berücksichtigung des aktuellen und/oder des voraussichtlichen geographischen Aufenthaltsorts des mobilen Endgerätes für eine Auswahl des an das mobile Endgerät über das Mobilfunknetz zu übertragenden Teils des Ergebnisses der Auswertung vor. Durch diese erfindungsgemäße Ausgestaltung werden dem Nutzer des mobilen Endgerätes automatisch für diesen relevante beziehungsweise interessante Verkehrslageinformationen zur Wiedergabe bereitgestellt und dieser nicht mit unnötigen beziehungsweise für diesen nicht interessanten Verkehrslageinformationen belastet.

In einer weiteren vorteilhaften Ausgestaltung der Erfindung erfolgt im Rahmen der Auswertung eine Plausibilitätsprüfung. Durch die Plausibilitätsprüfung im Rahmen der Auswertung können so die Zuverlässigkeit und die Genauigkeit des erfindungsgemäßen Verfahrens weiter verbessert werden, insbesondere da praktisch unsinnige Auswertungsergebnisse ausgefiltert beziehungsweise verworfen werden können.

Ferner wird mit der vorliegenden Erfindung ein Mobilfunknetz, vorzugsweise gemäß dem GSM- und/oder UMTS-Funknetzstandard, mit einer aus Funkzellen aufgebaute zellulare Netzstruktur ausbildenden Einrichtungen zur Gewährung eines Zugangs zu Telekommunikationsdiensten für wenigstens ein mobiles Endgerät vorgeschlagen, welches eine Einrichtung zur Bestimmung von Parametern zur Beschreibung von ortsabhängigen Empfangscharakteristika eines Signals aufweist. Vorteilhafterweise dienen die Parameter des Signals wenigstens zur Beschreibung von Streuungen, Beugungen, Abschattungen und/oder Reflektionen. Vorteilhafterweise sind die Einrichtungen eines erfindungsgemäßen Mobilfunknetzes ausgebildet und/oder eingerichtet ein erfindungsgemäßes Verfahren auszuführen.

Weitere Einzelheiten, Merkmale und Vorteile der Erfindung werden nachfolgend anhand des in der Figur der Zeichnung dargestellten Ausführungsbeispiels näher erläutert. Dabei zeigt:

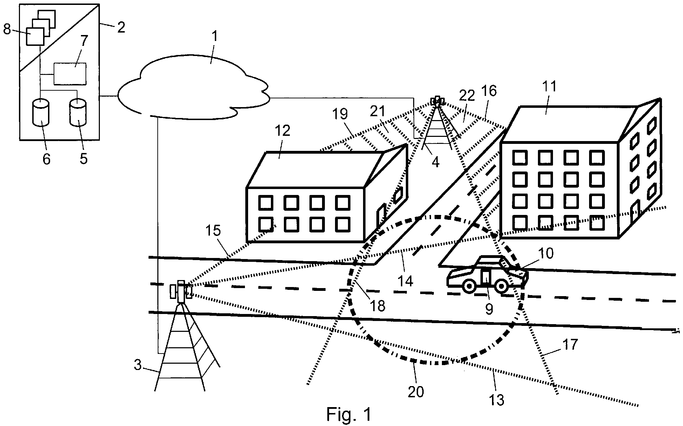

- Fig. 1: in einer schematischen Prinzipdarstellung ein Ausführungsbeispiel einer erfindungsgemäßen Bestimmung des geographischen Aufenthaltsorts eines in einem Mobilfunknetz betriebenen mobilen Endgerätes.

Fig. 1 zeigt ein Mobilfunknetz 1 mit einer aus Funkzellen aufgebaute zellulare Netzstruktur ausbildenden Einrichtungen 2, 3 und 4 zum Aufbau, zur Aufrechterhaltung, zum Abbau und/oder zur Verwaltung von zu Kommunikationszwecken dienenden Verbindungen zwischen den Einrichtungen des Mobilfunknetzes und darin betreibbaren mobilen Endgeräten, insbesondere Mobilfunktelefonen 9. Die Kommunikation zwischen den Komponenten beziehungsweise Einrichtungen des Mobilfunknetzes erfolgt vorliegend durch hierarchisch strukturierte Kommunikationsprotokolle, vorliegend gemäß dem GSM- und/oder UMTS-Funknetzstandard. Die Einrichtungen 3 und 4, vorliegend jeweils wenigstens eine Funkzelle ausbildende Basisstationen, sogenannte Base Transceiver Stations (BTSs) sind durch ihre Antennen dabei die wohl sichtbarsten Netzwerkelemente und stellen die sogenannte Luftschnittstelle (Air Interface) über eine Funkverbindung zwischen einem in dem Mobilfunknetz betreibbaren mobilen Endgerät 9 und dem Mobilfunknetz her. Die Basisstationen 3, 4 weisen dazu Antennen auf, die in Abhängigkeit ihrer jeweiligen Sendeleistung bestimmte Flächenbeziehungsweise Raumbereiche abdecken. Die Flächen- beziehungsweise Raumbereiche bilden dabei die Funkzellen beziehungsweise Sektoren aus. Seitens der symbolisch mit Bezugsziffer 2 gekennzeichneten Einrichtungen des Mobilfunknetzes 1 ist eine Datenbank 5 vorgesehen, in welcher der geographische Aufenthaltsort der Basisstationen 3 und 4 des Mobilfunknetzes erfasst ist.

In Abhängigkeit von den topographischen Begebenheiten weisen die Basisstationen 3 und 4 für sie spezifische Signal Sende- und Empfangscharakteristika auf, welche durch die am jeweiligen geographischen Aufenthaltsort gegebenen topographischen Besonderheiten, zum einen durch den Aufstellort zum anderen durch Gebäude 11 und 12 oder dergleichen Einrichtungen als auch durch Wetterbedingungen beeinflusst werden.

Seitens der Einrichtung 2 ist eine Datenbank 6 vorgesehen, in welcher Parameter zur Beschreibung von ortsabhängigen Empfangscharakteristika eines Signals erfasst beziehungsweise gespeichert sind. Die Parameter beschreiben dabei insbesondere Streuungen, Beugungen, Abschattungen und/oder Reflektionen von Signalen, die am jeweiligen Aufstellort der Basisstation 3 und 4 des Mobilfunknetzes erfasst sind. Die Informationen der Datenbank 5, also Information hinsichtlich einer Identifikation des Empfangsortes bezüglich der jeweiligen Basisstation als auch die in der Datenbank 6 erfassten Parameter zur Beschreibung von ortsabhängigen Empfangscharakteristika eines Signals können auch zusammengefasst in einer einzigen Datenbank erfasst werden. Die Datenbank 6 erfasst somit Referenzinformationen hinsichtlich des Empfangs der wenigstens eine Funkzelle ausbildenden Einrichtungen 3 und 4 des Mobilfunknetzes bezüglich des jeweiligen geographischen Aufenthaltsorts in den Funkzellen der Einrichtungen 3 und 4.

Zur Bestimmung des geographischen Aufenthaltsorts eines mobilen Endgerätes 9 werden von diesem Parameter hinsichtlich der Empfangscharakteristika aktuell empfangender Signale seitens des Mobilfunknetzes erfasst. Vorliegend geschieht dies über die Einrichtungen 3 und 4 des Mobilfunknetzes. Dabei werden zwischen dem mobilen Endgerät 9, welches sich vorliegend in einem Kraftfahrzeug 10 befindet, und den jeweiligen Basisstationen 3 und 4 des Mobilfunknetzes Signale ausgetauscht und diese hinsichtlich der aktuellen Parameter in der Empfangscharakteristika, also hinsichtlich Signalsteuerung, Signalbeugung, Signalabschattung und/oder Reflektionen ausgewertet. Seitens der symbolisch dargestellten Einrichtung 2 des Mobilfunknetzes 1 ist eine Einrichtung 7 zur Bestimmung von Parametern zur Beschreibung von ortsabhängigen Empfangscharakteristika eines Signals vorgesehen. Die Einstellung 7 hält dabei von den Basisstationen 3 und 4 entsprechende Informationen umfassend Parameter, die die Empfangscharakteristika eines aktuell zwischen dem mobilen Endgerät 9 und den jeweiligen Basisstationen 3 und 4 ausgetauschten Signale beschreiben. Die zur Bestimmung von die Empfangscharakteristika aktuell empfangender Signale genutzten Signale können zum einen vom mobilen Endgerät 9 an die jeweiligen Basisstationen 3 und 4 in dessen Umgebung gesendet und von diesen über das Mobilfunknetz 1 der Einrichtung 7 zugeführt werden. Alternativ und/oder ergänzend können zunächst die Basisstationen 3 und 4 entsprechende Signale an das mobile Endgerät 9 senden, die entsprechende Signalantwort des mobilen Endgerätes 9, umfassend die jeweils aktuellen Parameter hinsichtlich der Empfangscharakteristika der Signale empfangen und dann über das Mobilfunknetz 1 an die Einrichtung 7 zur weitergehenden Auswertung übertragen.

Seitens der Einrichtung 2 des Mobilfunknetzes 1 ist zur Bestimmung des Aufenthaltsortes des mobilen Endgerätes 9 eine Vergleichseinrichtung 8, vorliegend ein seitens einer Recheneinrichtung ausgeführtes Anwendungsprogramm, vorgesehen, welches die von beziehungsweise mit der Einrichtung 7 erfassten Parameter von Empfangscharakteristika eines aktuell empfangenden Signals des mobilen Endgerätes 9 mit den in den Datenbanken 5 und 6 erfassten Parametern zur Beschreibung von ortsabhängigen Empfangscharakteristika eines Signals vergleichen. Das Ergebnis des Vergleichs liefert dabei den geographischen Aufenthaltsort des mobilen Endgerätes 9 im Mobilfunknetz, da die am jeweiligen aktuellen Aufenthaltsort des mobilen Endgerätes 9 im Mobilfunknetz 1 gegebenen Parameter von Empfangscharakteristika eines Signals derart eindeutig sind, dass aufgrund der Parameter und der Kenntnis des geographischen Aufenthaltsorts der Basisstationen 3 und 4 bezüglich der in der Datenbank 6 erfassten ortsabhängigen Empfangscharakteristika eines Signals die Bestimmung des geographischen Aufenthaltsorts des mobilen Endgerätes 9 eindeutig ermöglichen.

Erfindungsgemäß ist so seitens der Datenbank 5 der geographische Aufenthaltsort der Basisstationen 3 und 4 erfasst. Weiter sind in der Datenbank 6 Parameter zur Beschreibung der ortsabhängigen Empfangscharakteristika eines Signals der Basisstationen 3 und 4 erfasst. Eine Verknüpfung der Datenbank 5 mit der Datenbank 6 erfolgt dabei aufgrund einer Bezeichnung beziehungsweise Identifizierung der Basisstationen 3 und 4. Mobilfunknetzseitig sind damit Parameter zur Beschreibung von ortsabhängigen Empfangscharakteristika eines Signals an einem bestimmten geographischen Empfangsort des Signals vorliegend.

Die Parameter der Empfangscharakteristika der Basisstationen 3 und 4 sind dabei durch Signalstreuungen, Signalbeugungen, Signalabschattungen und/oder Reflektionen für den jeweiligen geographischen Aufenthaltsort in deren Funkzellen eindeutig definiert. Im vorliegenden Fall werden beispielsweise die symbolisch durch gestrichelte Linien dargestellten Sendekegel der Antennen der Basisstationen 3 und 4 aufgrund der topographischen Besonderheiten an dem jeweiligen geographischen Aufenthaltsort unterschiedlich ausgebildet. So werden beispielsweise die zwischen den gestrichelt eingezeichneten Linien 14 und 15 verlaufenen Signale der Basisstationen 3 an dem Gebäude 12 anders abgeschattet, gebeugt, gestreut und reflektiert, als die zwischen den gestrichelten Linien 13 und 14 ausgesendeten Signale der Basisstation 3. Bei der Basisstation 4 werden die zwischen den symbolisch eingezeichneten gestrichelten Linien 16 und 17 und 18 und 19 eingezeichneten Strahlkegel 21 und 22 durch das Gebäude 11 beziehungsweise das Gebäude 12 abgeschattet. Das mobile Endgerät 9 im Kraftfahrzeug 10 befindet sich bei dem in Fig. 1 dargestellten Beispiel in dem symbolisch durch die gestrichelten Linien 13 und 14 gebildeten Strahlkegel für Signale der Basisstation 3 und in dem symbolisch durch die gestrichelten Linien 17 und 18 gebildeten Strahlkegel für Signale der Basisstation 4. Der entsprechende geographische Bereich 20 der Kreuzungen der Strahlkegel der Basisstationen 3 und 4 weist entsprechend der Topografie ein spezifisches Muster von Parametern der Empfangscharakteristika von Signalen auf. Die Erfassung entsprechender aktueller Parametern der Empfangscharakteristika des mobilen Endgerätes 9 in dem Bereich 20 ermöglicht durch Vergleich mit den seitens der Datenbank 6 gespeicherten Parametern zur Beschreibung ortsabhängiger Empfangscharakteristika eines Signals und der Kenntnis beziehungsweise Identifikation des Empfangsortes aufgrund des geographischen Aufenthaltsorts der Basisstationen 3 und 4 in der Datenbank 5 mittels des Anwendungsprogramms 8 eine Bestimmung des aktuellen geographischen Aufenthaltsorts des mobilen Endgerätes 9. Vorteilhafterweise erfolgt dabei ein Vergleich der aktuell erfassten Parameter mit den gespeicherten Parametern, besonders bevorzugt nach Art einer Mustererkennung.

Bei entsprechender Speicherung und Erfassung der Aufenthaltsorte verschiedener mobiler Endgeräte im Mobilfunknetz über der Zeit sind die entsprechend erfassten Informationen zur Ermittlung von Verkehrslageinformationen nutz- und auswertbar, insbesondere hinsichtlich einer prognostizierenden Verkehrslage, insbesondere für Stauinformationen.

Das in der Fig. der Zeichnung dargestellte Ausführungsbeispiel und die im Zusammenhang mit diesem erläuterten Anwendungen dienen lediglich der Erläuterung der Erfindung und sind für diese nicht beschränkend.

### Bezugszeichenliste:

- 1: Mobilfunknetz
- 2: Einrichtung (Mobilfunknetz 1)
- 3: Funkzellenausbildende Einrichtung des Mobilfunknetzes (1)/Basisstation (BTS)
- 4: Funkzellenausbildende Einrichtung des Mobilfunknetzes (1)/Basisstation (BTS)
- 5: Datenbank (geographischer Aufenthaltsort Basisstationen (3, 4))
- 6: Datenbank Parameter ortsabhängiger Empfangscharakteristika eines Signals von Basisstation (3,4)
- 7: Einrichtung zur Erfassung von Parametern von Empfangscharakteristika eines aktuell empfangenden Signals
- 8: Anwendungsprogramm Vergleich/Auswertung
- 9: mobiles Endgerät/Mobilfunktelefon
- 10: Kraftfahrzeug
- 11: Gebäude
- 12: Gebäude
- 13: Grenze Strahlkegel (Basisstation (3))
- 14: Grenze Strahlkegel (Basisstation (3))
- 15: Grenze Strahlkegel (Basisstation (3))
- 16: Grenze Strahlkegel (Basisstation (4))
- 17: Grenze Strahlkegel (Basisstation (4))
- 18: Grenze Strahlkegel (Basisstation (4))
- 19: Grenze Strahlkegel (Basisstation (4))
- 20: geographischer Bereich mit spezifischem Muster von Parametern von Empfangscharakteristika (Schnittfläche beziehungsweise -volumen Strahlkegel 13 - 14 der Basisstation 3 und Strahlkegel 17 - 18 der Basisstation 4)
- 21: Abschattung (Strahlkegel 18 - 19 der Basisstation 4 durch Gebäude 12)
- 22: Abschattung (Strahlkegel 16 - 17 der Basisstation 4 durch Gebäude 11)

## Patentansprüche

1. Verfahren zur Bestimmung des geographischen Aufenthaltsorts eines in einem Mobilfunknetz (1) betriebenen mobilen Endgerätes (9), wobei das Mobilfunknetz (1) eine aus Funkzellen aufgebaute zellulare Netzstruktur ausbildende Einrichtungen (2, 3, 4) aufweist, umfassend die folgenden Verfahrensschritte:
- Speicherung von Parametern zur Beschreibung von ortsabhängigen Empfangscharakteristika eines Signals, wobei die Parameter zusammen mit wenigstens einer Information zur Identifikation des Empfangsortes gespeichert werden,
- Empfangen von Parametern die die Empfangscharakteristika eines aktuell empfangenen Signals beschreiben, wobei die Parameter dem mobilen Endgerät (9) zugeordnet sind und
- Bestimmen des Aufenthaltsortes des mobilen Endgerätes durch Vergleichen der empfangenen Parameter mit gespeicherten Parametern,
wobei das Signal von einer Einrichtung (3, 4) des Mobilfunknetzes (1) gesendet und von einem mobilen Endgerät (9) empfangen wird und eine entsprechende Signalantwort des mobilen Endgerätes (9), umfassend die jeweils aktuellen Parameter hinsichtlich der Empfangscharakteristika des Signals von der Einrichtung (3, 4) des Mobilfunknetzes (1) empfangen wird und topographisch und/oder mobilfunknetzseitig begründete Änderungen hinsichtlich des Empfangs der wenigstens eine Funkzelle ausbildenden Einrichtungen des Mobilfunknetzes (1) von dem wenigstens einen mobilen Endgerät (9) im Rahmen einer vorzugsweise dynamisch erfolgenden Anpassung der gespeicherten Parameter erfasst werden.

2. Verfahren nach Anspruch 1, wobei die Parameter des Signals wenigstens zur Beschreibung von Streuungen, Beugungen, Abschattungen und/oder Reflexionen dienen oder genutzt werden.

3. Verfahren nach Anspruch 1 oder Anspruch 2, wobei im Rahmen des Vergleichs wenigstens eine zu wenigstens einem vorhergehenden Zeitpunkt erfasste Information hinsichtlich des Empfangs und/oder wenigstens ein zu wenigstens einem vorhergehenden Zeitpunkt bestimmter Aufenthaltsort zur Bestimmung des aktuellen Aufenthaltsorts des mobilen Endgerätes (9) berücksichtigt wird.

4. Verfahren nach einem der Ansprüche 1 bis 3, wobei die Geschwindigkeit der Änderung des geographischen Aufenthaltsortes des mobilen Endgerätes (9) bestimmt wird, vorzugsweise durch Berechnung aus den Differenzen des bestimmten Ortes des mobilen Endgerätes (9) über der Zeit.

5. Verfahren zur Ermittlung von Verkehrslageinformationen, wobei Informationen des geographischen Aufenthaltsorts von in einem Mobilfunknetz (1) betriebenen mobilen Endgeräten (9) seitens des Mobilfunknetzes (1) erfasst und ausgewertet werden,
wobei die geographischen Aufenthaltsorte von zumindest einem in dem Mobilfunknetz (1) betriebenen mobilen Endgerät (9) nach einem Verfahren nach einem der Ansprüche 1 bis 4 bestimmt werden.

6. Verfahren zur Ermittlung von Verkehrslageinformationen nach Anspruch 5,
wobei zur Bestimmung der geographischen Aufenthaltsorte von zumindest einem in dem Mobilfunknetz (1) betriebenen mobilen Endgerät (9) Veränderungen und/oder Abweichungen in der Signalausbreitung von zellularen Signalen, vorzugsweise durch Abschattung, Beugung, Reflexion und/oder Streuung verursachte und/oder bedingte Veränderungen und/oder Abweichungen von einer idealtypischen radialen Ausbreitung der Signale, erfasst und geographischen Aufenthaltsorten zugeordnet werden.

7. Verfahren nach Anspruch 5 oder Anspruch 6, weiter umfassend
- eine Auswertung hinsichtlich einer Verteilung der geographischen Aufenthaltsorte mobiler Endgeräte (9),
- eine zusätzliche Erfassung und/oder Auswertung hinsichtlich des Zeitpunkts des Aufenthalts mobiler Endgeräte (9) an dem jeweiligen geographischen Aufenthaltsort, und/oder
- eine prognostizierende Auswertung hinsichtlich einer zu erwartenden Verkehrslage.

8. Verfahren nach Anspruch 7, weiter umfassend eine Plausibilitätsprüfung im Rahmen der Auswertung.

9. Verfahren nach einem der Ansprüche 7 bis 8, wobei das Ergebnis der Auswertung zumindest teilweise über das Mobilfunknetz (1) an wenigstens ein mobiles Endgerät (9) übertragen und seitens desselben wiedergegeben wird, wobei vorzugsweise eine Berücksichtigung des aktuellen und/oder des voraussichtlichen geographischen Aufenthaltsorts des mobilen Endgerätes (9) für eine Auswahl des an das mobile Endgerät (9) über das Mobilfunknetz (1) zu übertragenden Teils des Ergebnisses der Auswertung erfolgt.

10. Mobilfunknetz (1), vorzugsweise gemäß dem GSM- und/oder UMTS-Funknetzstandard, mit eine aus Funkzellen aufgebaute zellulare Netzstruktur ausbildenden Einrichtungen (3, 4) zur Gewährung eines Zugangs zu Telekommunikationsdiensten für wenigstens ein mobiles Endgerät (9), wobei dieses eine Einrichtung zur Bestimmung von Parametern zur Beschreibung von ortsabhängigen Empfangscharakteristika eines Signals aufweist, wobei die Parameter des Signals vorzugsweise wenigstens zur Beschreibung von Streuungen, Beugungen, Abschattungen und/oder Reflexionen dienen, **dadurch gekennzeichnet, dass** dessen Einrichtungen (2, 3, 4) zur Ausführung eines Verfahrens nach einem der Ansprüche 1 bis 9 ausgebildet und/oder eingerichtet sind.

## Claims

1. A method for determining the geographical position of a mobile terminal (9) that is operable in a mobile radio network (1), wherein the mobile radio network (1) comprises devices (2, 3, 4) forming a cellular network structure composed of radio cells, comprising the following process steps:
- storing parameters for describing reception characteristics dependant on the location of a signal, wherein the parameters will be stored together with at least one information item for identifying the receiving location,
- receiving parameters which describe the reception characteristics of a currently received signal, wherein the parameters are assigned to the mobile terminal (9) and
- determining the local position of the mobile terminal by comparing the received parameters with stored parameters,
wherein the signal will be sent from a device (3, 4) of the mobile radio network (1) and received by a mobile terminal (9), and a corresponding signal response of the mobile terminal (9) comprising the respectively current parameters with respect to the reception characteristics of the signal will be received by the device (3, 4) of the mobile radio network (1) and topographically caused changes and/or changes caused by the mobile radio network with respect to the reception of the devices of the mobile radio network (1) which form at least one radio cell will be gathered by the at least one mobile terminal (9) within the scope of an adaptation of the stored parameters that preferably takes place dynamically.

2. A method according to claim 1, wherein the parameters of the signal at least serve or are used for describing diffusions, diffractions, shadowing and/or reflexions.

3. A method according to claim 1 or claim 2, wherein within the scope of the comparison at least one information item with respect to the reception that has been previously collected and/or at least one local position that has been previously determined will be considered for determining the current local position of the mobile terminal (9).

4. A method according to one of the claims 1 to 3, wherein the velocity of changing the geographical position of the mobile terminal (9) will be determined, preferably by calculating the differences of the determined location of the mobile terminal (9) over the time.

5. A method for collecting information about the traffic situation, wherein information about the geographical position of mobile terminals (9) operated in a mobile radio network (1) will be gathered and evaluated by means of the mobile radio network (1).
wherein the geographical positions of at least one mobile terminal (9) operated in the mobile radio network (1) will be determined according to a method according to one of the claims 1 to 4.

6. A method for collecting information about the traffic situation according to claim 5,
wherein changes and/or differences in the signal distribution of cellular signals, preferably changes and/or differences from an ideal-typical radial distribution of the signals caused by and/or due to shadowing, diffraction, reflexion and/or diffusion, will be detected and allocated to geographical positions for determining the geographical positions of at least one mobile terminal (9) operated in the mobile radio network (1).

7. A method according to claim 5 or claim 6, further comprising
- an evaluation with respect to a distribution of the geographical positions of mobile terminals (9),
- an additional gathering and/or evaluation with respect to the point in time of the stay of mobile terminals (9) at the respective geographical position, and/or
- a prognosticating evaluation with respect to a traffic situation to be expected.

8. A method according to claim 7, further comprising a plausibility check within the scope of the evaluation.

9. A method according to one of the claims 7 to 8, wherein the result of the evaluation will be at least partially transmitted via the mobile radio network (1) to at least one mobile terminal (9) and be reproduced by means of the same one, wherein preferably the current and/or the expected geographical position of the mobile terminal (9) will be considered in the selection of the part of the result of the evaluation to be transmitted via the mobile radio network (1) to the mobile terminal (9).

10. A mobile radio network (1), preferably according to the GSM and/or UMTS radio network standard, comprising devices (2, 3, 4) forming a cellular network structure composed of radio cells for allowing an access to telecommunication services for at least one mobile terminal (9), wherein this one comprises a device for determining parameters for describing location-dependent reception characteristics of a signal, wherein the parameters of the signal preferably serve for at least describing diffusions, diffractions, shadowing and/or reflexions, **characterized in that** the devices (2, 3, 4) thereof are configured for and/or adapted to carrying out a method according to one of the claims 1 to 9.

## Revendications

1. Procédé de détermination d'une position géographique d'un terminal mobile (9) fonctionnant dans un réseau radio mobile (1), le réseau radio mobile (1) comprenant des dispositifs (2, 3, 4) formant une structure de réseau cellulaire composée de cellules radio, comprenant les étapes de procédé suivantes de:
- stocker des paramètres pour décrire des caractéristiques de réception en fonction du lieu d'un signal, les paramètres étant stockés ensemble avec au moins une information pour identifier le lieu de réception,
- recevoir des paramètres, qui décrivent les caractéristiques de réception d'un signal actuellement reçu, les paramètres étant attribués au terminal mobile (9) et
- déterminer la position locale du terminal mobile en comparant les paramètres reçus avec des paramètres stockés,
dans lequel le signal est envoyé par un dispositif (3, 4) du réseau radio mobile (1) et est reçu par un terminal mobile (9) et une réponse de signal correspondante du terminal mobile (9) comprenant les paramètres respectivement actuels par rapport aux caractéristiques de réception du signal est reçue par le dispositif (3, 4) du réseau radio mobile (1) et des changements causés topographiquement et/ou par le réseau radio mobile par rapport à la réception des dispositifs du réseau radio mobile (1) formant au moins une cellule radio sont saisis par l'au moins un terminal mobile (9) dans le cadre d'une adaptation des paramètres stockés, laquelle se fait de préférence de manière dynamique.

2. Procédé selon la revendication 1, dans lequel les paramètres du signal servent au moins à ou sont au moins utilisés pour décrire des diffusions, des diffractions, des ombrages et/ou des réflexions.

3. Procédé selon la revendication 1 ou la revendication 2, dans lequel dans le cadre de la comparaison au moins une information par rapport à la réception, laquelle information a été saisie à un instant précédent, et/ou au moins une position locale qui a été déterminée à un instant précédent est considérée pour déterminer la position locale actuelle du terminal mobile (9).

4. Procédé selon l'une des revendications 1 à 3, dans lequel la vélocité du changement de la position géographique du terminal mobile (9) est déterminée, de préférence à l'aide du calcul des différences du lieu déterminé du terminal mobile (9) dans le temps.

5. Procédé de détermination des informations sur la situation du trafic, dans lequel des informations de la position géographique des terminaux mobiles (9) fonctionnant dans un réseau radio mobile (1) sont saisies et évaluées par moyen du réseau radio mobile (1),
dans lequel les positions géographiques d'au moins un terminal mobile (9) fonctionnant dans le réseau radio mobile (1) sont déterminées selon le procédé selon l'une des revendications 1 à 4.

6. Procédé de détermination des informations sur la situation du trafic selon la revendication 5,
dans lequel des changements et/ou des différences dans la dispersion du signal des signaux cellulaires, de préférence des changements et/ou des différences par rapport à la propagation idéale radiale des signaux causés par et/ou en raison des ombrages, des diffractions, des réflexions et/ou des diffusions, sont détectés et attribués à des positions géographiques pour déterminer les positions géographiques d'au moins un terminal mobile (9) fonctionnant dans le réseau radio mobile (1).

7. Procédé selon la revendication 5 ou la revendication 6, comprenant en outre
- une évaluation par rapport à la distribution des positions géographiques de terminaux mobiles (9),
- une saisie et/ou évaluation supplémentaire par rapport au moment précis du séjour des terminaux mobiles (9) à la position géographique respective, et/ou
- une évaluation prévoyante par rapport à la situation du trafic à attendre.

8. Procédé selon la revendication 7, comprenant en outre un contrôle de plausibilité dans le cadre de l'évaluation.

9. Procédé selon l'une des revendications 7 à 8, dans lequel le résultat de l'évaluation est au moins partiellement transmis via le réseau radio mobile (1) à au moins un terminal mobile (9) et est reproduit par moyen de celui-ci, dans lequel la position géographique actuelle et/ou vraisemblable du terminal mobile (9) est de préférence considérée pour sélectionner la partie du résultat de l'évaluation, laquelle partie est à transmettre via le réseau radio mobile (1) au terminal mobile (9).

10. Réseau radio mobile (1), de préférence selon le standard de réseau radio GSM et/ou UMTS, comprenant des dispositifs (2, 3, 4), qui forment une structure de réseau cellulaire composée de cellules radio pour permettre un accès à des services de télécommunication pour au moins un terminal mobile (9), dans lequel celui-ci comprend un dispositif pour déterminer des paramètres pour décrire des caractéristiques de réception en fonction du lieu d'un signal, les paramètres du signal servant de préférence à décrire au moins des diffusions, des diffractions, des ombrages et/ou des réflexions, **caractérisé en ce que** les dispositifs (2, 3, 4) de celui-ci sont configurés et/ou adaptés pour exécuter un procédé selon l'une des revendications 1 à 9.
